# EUROPEAN PATENT APPLICATION

(11) **EP 4 510 312 A1**
(43) Date of publication of application: **19.02.2025**
(21) Application number: 23829669.3
(22) Date of filing: 26.04.2023
(51) Int. Cl.: H01M 10/658

(54) **BATTERY AND ELECTRICAL DEVICE**

(30) Priority: 29.06.2022 CN 202210748421
(71) Applicant: Contemporary Amperex Technology (Hong Kong) Limited, Hong Kong (HK)
(72) Inventor: XU, Endong, Ningde, Fujian 352100 (CN); LI, Ting, Ningde, Fujian 352100 (CN); XIAO, Zhiwei, Ningde, Fujian 352100 (CN)
(74) Representative: Ziebig Hengelhaupt Intellectual Property Attorneys Patentanwaltskanzlei PartGmbB
(86) International application number: PCT/CN2023/090981
(87) International publication number: WO 2024/001482

(57) **Abstract**

Embodiments of the present application disclose a battery and an electrical device. The battery includes: a battery cell provided with a pressure relief mechanism; and a protective plate disposed opposite the pressure relief mechanism, wherein the protective plate includes at least two protective sheets, and the at least two protective sheets are two different polymer matrix composite fiber sheets. The technical solution provided by the present application can protect a box of the battery from gas flow impact and high-temperature melting caused by thermal runaway of the battery, thereby enhancing the safety performance of the battery.

## Description

### Cross-reference

The present application claims the priority of Chinese Application No. 202210748421.7 entitled "BATTERY AND ELECTRICAL DEVICE" and filed with the Chinese patent office on 29 June, 2022, which is incorporated herein by reference in its entirety.

### Technical Field

The present application relates to the technical field of batteries, and in particular, to a battery and an electrical device.

### Background

Energy conservation and emission reduction are the key to the sustainable development of the automobile industry. In this case, electric vehicles have become an important part of the sustainable development of the vehicles because of their advantages of energy saving and environmental friendliness. For the electric vehicles, the battery technology is an important factor related to their development.

In the development of the battery technology, in addition to improving the performance of batteries, safety is also an issue that cannot be ignored. If the safety of the battery cannot be guaranteed, the battery cannot be used. Therefore, how to enhance the safety of the batteries is an urgent technical problem to be solved in the battery technology.

### Summary of the Invention

In view of the above problem, embodiments of the present application provide a battery and an electrical device, which can reduce the possibility of a box of the battery suffering from gas flow impact and high-temperature melting caused by thermal runaway of the battery, thereby enhancing the safety performance of the battery.

In a first aspect, provided is a battery, including: a battery cell provided with a pressure relief mechanism; and a protective plate disposed opposite the pressure relief mechanism, wherein the protective plate includes at least two protective sheets, and the at least two protective sheets are different polymer matrix composite fiber sheets.

In the embodiments of the present application, the battery includes a battery cell, and a pressure relief mechanism is provided on the battery cell to protect the battery cell; and the battery further includes a protective plate including at least two protective sheets. The protective plate is disposed opposite the pressure relief mechanism, that is, the protective plate directly faces the pressure relief mechanism. The protective plate is made of at least two polymer matrix composite fiber sheets, which can withstand high temperature and impact. By disposing the pressure relief mechanism opposite the protective plate, when the battery cell is subjected to thermal runaway, the protective plate composed of at least two protective polymer matrix composite fiber sheets can reduce the possibility of a high-temperature and high-speed gas-solid mixture being released from the pressure relief mechanism, and protect the box of the battery from gas flow impact and high-temperature melting, thereby reducing the influence on the performance of the battery.

In a possible embodiment, the at least two protective sheets have high-temperature resistance capabilities decreasing in a direction away from the pressure relief mechanism.

In the embodiment of the present application, the protective plate is disposed opposite the pressure relief mechanism to protect the box of the battery from the high-temperature and high-speed gas-solid mixture released by the pressure relief mechanism. The protective plate includes at least two different protective sheets, and the at least two different protective sheets have decreasing high-temperature resistance capabilities, that is, the protective sheet close to the pressure relief mechanism has the strongest high-temperature resistance capability. By using the protective plate designed with a gradient structure, while improving the safety of the battery, the high-temperature resistance capabilities and the impact resistance capabilities of different protective sheets can be fully utilized, which will not lead to excess performance and thus reduce the cost of the protective plate.

In a possible embodiment, the polymer matrix composite fiber sheets are fiber-reinforced resin composite sheets.

In the embodiment of the present application, the fiber-reinforced resin composite sheets are prepared with resin among polymer materials as the matrix to make the protective plate. Compared with other polymer material matrices, the fiber-reinforced resin composite sheets have a better high-temperature resistance and impact resistance performance.

In a possible embodiment, each fiber-reinforced resin composite sheet includes a plurality of fiber-reinforced resin layers, and each fiber-reinforced resin layer is made of a composite of a fiber material and a resin material.

In the embodiment of the present application, the fiber-reinforced resin is a material that can withstand high temperature and impact. By using the fiber-reinforced resin composite sheets prepared from this material, and disposing the protective plate made of a plurality of fiber-reinforced resin composite sheets opposite the pressure relief mechanism, when the high temperature and emissions inside the battery cell rush out of the battery cell at a high speed, the protective plate can protect the box to minimize the possibility of the box being impacted by high-temperature melting and high-speed emissions, thereby protecting the safety of the battery.

In a possible embodiment, the protective plate includes a first protective sheet, a second protective sheet and a third protective sheet, the first protective sheet, the second protective sheet and the third protective sheet being sequentially away from the pressure relief mechanism.

In the embodiment of the present application, the protective plate includes three protective sheets, namely the first protective sheet, the second protective sheet and the third protective sheet. The protective plate made of the three protective sheets is disposed opposite the pressure relief mechanism, so that the protection effect of the protective plate on the safety of the battery can be further improved.

In a possible embodiment, the fiber material in the first protective sheet is a carbon fiber or a quartz fiber.

In the embodiment of the present application, the first protective sheet, the second protective sheet and the third protective sheet are sequentially away from the pressure relief mechanism, that is, the first protective sheet is closest to the pressure relief mechanism. The first protective sheet made of the carbon fiber or the quartz fiber has the best high-temperature resistance effect and can reduce the influence on the performance of the battery.

In a possible embodiment, the fiber material in the second protective sheet is a ceramic material or a high silica fiber.

In the embodiment of the present application, the first protective sheet, the second protective sheet and the third protective sheet are sequentially away from the pressure relief mechanism, that is, the second protective sheet is not closer to the pressure relief mechanism than the first protective sheet. Compared with the first protective sheet made of the carbon fiber or the quartz fiber, the second protective sheet made of the ceramic fiber or the high silica fiber can save material costs. Moreover, after the most high-temperature resistant first protective sheet blocks the high temperature, the second protective sheet also has a good high temperature resistance capability and continues to protect the box of the battery from the high temperature and the gas flow impact.

In a possible embodiment, the fiber material in the third protective sheet is a glass fiber or a pre-ammonium fiber.

In the embodiment of the present application, the first protective sheet, the second protective sheet and the third protective sheet are sequentially away from the pressure relief mechanism, that is, the third protective sheet is farthest from the pressure relief mechanism. Compared with the first protective sheet and the second protective sheet, the third protective sheet withstands the lowest temperature released by the pressure relief mechanism. Therefore, using the glass fiber or the pre-ammonia fiber to make the third protective sheet can further reduce the possibility of heat diffusion, protect the safety of the battery, and save costs to the greatest extent.

In a possible embodiment, each of the plurality of fiber-reinforced resin layers of the first protective sheet includes fibers arranged in two directions.

In the embodiment of the present application, the first protective sheet is closest to the pressure relief mechanism, and the first protective sheet first comes into contact with the high temperature and a gas flow when they are released by the pressure relief mechanism. Therefore, the first protective sheet has the highest requirements for high-temperature resistance and impact resistance capabilities. The first protective sheet includes a plurality of fiber-reinforced resin layers, and each of the plurality of fiber-reinforced resin layers includes fibers arranged in two directions. The strength of the fiber material in such an arrangement is higher than that of the fiber material having only one arrangement direction, so that the protection effect of the first protective sheet on the battery can be improved.

In a possible embodiment, each of the plurality of fiber-reinforced resin layers of each of the second protective sheet and the third protective sheet includes fibers arranged in the same direction, and different fiber-reinforced resin layers are perpendicular to each other.

In the embodiment of the present application, in order to increase the strength of the first protective sheet and thus enhance the protection effect of the first protective sheet, the fiber material in each fiber-reinforced resin layer of the first protective sheet includes fibers arranged in two different directions. However, for the second protective sheet and the third protective sheet, which do not have such high strength requirements, the arrangement of the fiber material in each fiber-reinforced resin layer thereof maintains a single orientation, which can maintain a certain strength and also reduce costs.

In a possible embodiment, each of the plurality of fiber-reinforced resin layers of each of the first protective sheet, the second protective sheet and the third protective sheet includes fibers arranged in two directions.

In the embodiment of the present application, when each fiber-reinforced resin layer includes fibers arranged in two directions, such an arrangement of the fiber material has a higher strength. The fibers in the plurality of fiber-reinforced resin layers in different protective sheets are all arranged in such a high-strength arrangement, so that the protection effect of the protective plate on the battery can be further improved.

In a possible embodiment, the two arrangement directions are perpendicular to each other.

In the embodiments of the present application, when the fiber material in the fiber-reinforced resin layer includes fibers that are perpendicular to each other, the fiber material in such an arrangement has the highest strength.

In a possible embodiment, a thickness ratio of the first protective sheet to the protective plate ranges from 1:10 to 2:10.

In the embodiment of the present application, when the thickness of the first protective sheet is 10% of the total thickness of the protective plate, the first protective sheet can withstand the high temperature and the gas flow impact released by the pressure relief mechanism. When the thickness of the first protective sheet is continued to be increased to 20% of the thickness of the protective plate, the protection effect of the first protective sheet on the battery can be improved. If the thickness of the first protective sheet continues to increase, it will only increase the cost too much but have little effect on improving the protection effect.

In a possible embodiment, a thickness ratio of the second protective sheet to the protective plate ranges from 3:10 to 6:10.

In the embodiment of the present application, when the thickness of the second protective sheet is between 30% and 60% of the total thickness of the protective plate, the second protective sheet can continue to protect the battery and save the overall production cost of the protective plate.

In a possible embodiment, a thickness ratio of the third protective sheet to the protective plate ranges from 2:10 to 5:10.

In the embodiment of the present application, when the thickness of the third protective sheet is between 20% and 50% of the total thickness of the protective plate, the third protective sheet can continue to protect the battery and save the overall production cost of the protective plate.

In a possible embodiment, a thickness ratio of the first protective sheet, the second protective sheet and the third protective sheet is 2:4:4.

In the embodiment of the present application, the protective plate designed with the gradient fiber structure is disposed directly opposite the pressure relief mechanism, so that not only can the box of the battery be prevented from the high temperature and gas flow released by the pressure relief mechanism, and the safety of the battery be protected, but the production cost of the protective plate can also be reduced. Setting the thicknesses of the first protective sheet, the second protective sheet and the third protective sheet that are sequentially away from the pressure relief mechanism to 2:4:4 can minimize material costs while reducing the influence on the performance of the battery.

In a possible embodiment, the resin material is a silicon-based aerogel modified resin or a high-temperature resistant flame retardant resin.

In the embodiment of the present application, the material made of a composite of fiber and resin has a high-temperature resistance and impact resistance performance. The use of the silicon-based aerogel modified resin or the high-temperature resistant flame retardant resin can further improve the high-temperature resistance and impact resistance performance of the protective plate.

In a possible embodiment, the fiber material has a thickness of 6-100 um.

The use of the fiber material with a thickness of 6-100 um can not only make the protective plate have the high-temperature resistance and impact resistance performance, but can also reduce the production cost.

In a possible embodiment, the protective plate has a thickness of 0.2-5 mm.

The use of the protective plate with a thickness of 0.2-5 mm can not only make the protective plate have the high-temperature resistance and impact resistance performance, but can also reduce the production cost.

In a possible embodiment, the battery cell is accommodated in a box, the pressure relief mechanism is disposed on a first wall of the battery cell, and the first wall is a wall of the battery cell that is disposed close to a top cover of the box and opposite the top cover.

In the embodiment of the present application, when the first wall is a wall of the battery cell that is disposed close to the top cover of the box and opposite the top cover, the pressure relief mechanism faces the top cover. The protective plate is disposed opposite the pressure relief mechanism, that is, the protective plate is disposed close to the top cover. When the battery cell is subjected to thermal runaway, the protective plate made of the polymer matrix composite fibers can block the high temperature and the high-speed gas-solid mixture released by the pressure relief mechanism, reducing the possibility of the top cover of the battery suffering from the gas flow impact and the high-temperature melting.

In a possible embodiment, the protective plate is integrated with the top cover.

In the embodiment of the present application, the protective plate is integrated with the top cover. The protective plate and the top cover may be used together as the top cover of the battery, or the protective plate may be used alone as the top cover of the battery. When the protective plate and the top cover are used together as the top cover of the battery, the protective plate protects the top cover and thus better protects the battery. When the protective plate is used alone as the top cover of the battery, the protective plate protects the top cover of the battery from the high temperature and the gas flow impact while making the structure of the top cover of the battery simpler.

In a possible embodiment, the protective plate is disposed between the top cover and the first wall.

In the embodiment of the present application, the protective plate is disposed between the top cover and the first wall, that is, the protective plate is disposed between the top cover and the pressure relief mechanism. In this way, the protective plate can directly protect the top cover from the high temperature and the gas flow impact, thereby enhancing the safety performance of the battery.

In a possible embodiment, the size of the protective plate is the same as that of the top cover.

In the embodiment of the present application, the protective plate is disposed between the top cover and the first wall. When the size of the protective plate is the same as that of the top cover, the protective plate can not only protect the top cover from the high-temperature and high-speed gas-solid mixture released by the pressure relief mechanism, but can also improve the sealing effect on the interior of the battery. In addition, the same size of the protective plate and the top cover also facilitates assembly and reduces the difficulty of assembly.

In a possible embodiment, the size of the protective plate is less than that of the top cover.

In the embodiment of the present application, the protective plate is disposed between the top cover and the first wall. When the size of the protective plate is less than that of the top cover, the protective plate can protect the top cover and also reduce the cost.

In a possible embodiment, the protective plate is strip-shaped, and a projection of the protective plate on the first wall covers the pressure relief mechanism.

In the embodiment of the present application, the protective plate is disposed between the top cover and the first wall. When the protective plate is strip-shaped and the projection thereof on the first wall covers the pressure relief mechanism, the protective plate can maintain a good protection effect on the top cover, and can also reduce the cost to the greatest extent and avoid the waste of materials in non-protected areas.

In a possible embodiment, the length of the protective plate is 1 to 3 times the length of the pressure relief mechanism in a first direction which is an extension direction of the protective plate.

In the embodiment of the present application, the strip-shaped protective plate is disposed on the pressure relief mechanism and covers the pressure relief mechanism. The length of the protective plate is 1-3 times the length of the pressure relief mechanism in the first direction, so that the protective plate can completely cover the pressure relief mechanism.

In a possible embodiment, there are a plurality of block-shaped protective plates, and a projection of each protective plate on the first wall covers a respective pressure relief mechanism.

In the embodiment of the present application, the protective plate is disposed between the top cover and the first wall. Each protective plate is block-shaped and the projection thereof on the first wall covers the respective pressure relief mechanism. Each block-shaped plate is individually arranged above the corresponding pressure relief mechanism to form a one-to-one protection to accurately protect each battery cell.

In a possible embodiment, the area of each protective plate is 1-2 times the area of the respective pressure relief mechanism.

In the embodiment of the present application, the block-shaped protective plate implements one-to-one protection for a respective pressure relief mechanism for precise protection. The area of each block-shaped protective plate is 1-2 times the area of the respective pressure relief mechanism, further improving the protection effect of the protective plate on the battery.

In a possible embodiment, the protective plate is connected to the top cover by means of bolts or an adhesive.

In the embodiment of the present application, the bolt or adhesive is used to realize the connection between the protective plate and the top cover. This connection method is simple to implement, has strong operability, and is conducive to widespread use in production.

In a possible embodiment, the battery cell is accommodated in a box, the pressure relief mechanism is disposed on a first wall of the battery cell, and the first wall is a wall of the battery cell that is disposed close to a bottom wall of the box and opposite the bottom wall.

In the embodiment of the present application, when the first wall is a wall of the battery cell that is disposed close to the bottom wall of the box and opposite the bottom wall, the pressure relief mechanism faces the bottom wall. The protective plate is disposed opposite the pressure relief mechanism, that is, the protective plate is disposed close to the bottom wall. When thermal runaway occurs inside the battery cell, the protective plate made of the polymer matrix composite fibers can block the high temperature and the high-speed gas-solid mixture released by the pressure relief mechanism, thereby protecting the bottom wall of the battery from the gas flow impact and the high-temperature melting.

In a possible embodiment, the protective plate is integrated with the bottom wall of the box.

In the embodiment of the present application, the protective plate is integrated with the bottom wall. The protective plate and the bottom wall may be used together as the bottom wall of the battery, or the protective plate may be used alone as the bottom wall of the battery. When the protective plate and the bottom wall are used together as the bottom wall of the battery, the protective plate protects the bottom wall and thus better protects the safety of the battery. When the protective plate is used alone as the bottom wall of the battery, the protective plate protects the bottom wall of the battery from the high temperature and the gas flow impact while making the structure of the bottom wall of the battery simpler.

In a possible embodiment, the protective plate is disposed between the bottom wall and the first wall.

In the embodiment of the present application, the protective plate is disposed between the bottom wall and the first wall, that is, the protective plate is disposed between the bottom wall and the pressure relief mechanism. In this way, the protective plate can directly protect the bottom wall from the high temperature and the gas flow impact, thereby reducing the influence on the performance of the battery.

In a possible embodiment, a thermal insulation component is provided between the protective plate and the box.

In the embodiment of the present application, adding a protective plate between the first wall provided with the pressure relief mechanism and the box can protect the box of the battery from the high temperature and the high-speed gas flow impact. Further providing a thermal insulation component between the protective plate and the box can further reduce the temperature of the box and further enhance the safety performance of the battery.

In a second aspect, provided is an electrical device, including a battery of any one of the above embodiments, the battery being configured to supply electric energy.

### Brief Description of the Drawings

Fig. 1 is a schematic structural diagram of a vehicle according to an embodiment of the present application;
Fig. 2 is an exploded schematic diagram of a battery according to an embodiment of the present application;
Fig. 3 is an exploded schematic structural diagram of a battery cell according to an embodiment of the present application;
Fig. 4 is an exploded schematic structural diagram of a battery according to another embodiment of the present application;
Fig. 5 is a schematic structural diagram of a fiber resin reinforced layer according to an embodiment of the present application;
Fig. 6 is a schematic structural diagram of a protective plate according to an embodiment of the present application;
Fig. 7 is a structural diagram of an arrangement of a fiber material according to an embodiment of the present application;
Fig. 8 is an exploded schematic structural diagram of a battery according to still another embodiment of the present application;
Fig. 9 is an exploded schematic structural diagram of a battery according to yet another embodiment of the present application; and
Fig. 10 is a schematic structural diagram of a protective plate according to another embodiment of the present application.

The reference signs in Detailed Description are as follows:
vehicle 1; battery 2; battery cell 6; protective plate 8;
box 20, electrode assembly 61, shell 62, electrode terminal 63, connecting member 64, pressure relief mechanism 65, thermal insulation component 67, fiber-reinforced resin layer 81, first protective sheet 82, second protective sheet 83, third protective sheet 84;
first box portion/top cover 201, second box portion/bottom wall 202, accommodating space 203, housing 621, end cover 622, positive electrode terminal 631, negative electrode terminal 632, fiber material layer 811, fiber pores 812, first direction X.

### Detailed Description

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. In addition, the character "/" herein generally indicates an "or" relationship between the associated objects.

In the description of the embodiments of the present application, the term "plurality of" refers to at least two (including two); similarly, "plurality of groups" refers to at least two (including two) groups, and "plurality of pieces" refers to at least two (including two) pieces.

In the description of the embodiments of the present application, the orientation or position relationships indicated by the technical terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "peripheral" and the like are based on the orientation or position relationships shown in the drawings, and are only for convenience and simplification of the description of the embodiments of the present application, but do not indicate or imply that the apparatuses or elements referred to must have particular orientations, be constructed and operated in particular orientations, and therefore cannot be construed as a limitation of the embodiments of the present application.

In the description of the embodiments of the present application, unless otherwise expressly specified and limited, the technical terms "mounting", "connected", "connecting", "fixing", and the like shall be understood in a broad sense, which, for example, may be a fixed connection, or a detachable connection or an integral connection; may also be a mechanical connection, or an electrical connection; may be a direct connection, or an indirect connection through an intermediate medium, and may be a communication within two elements or an interactive relationship between two elements. For those of ordinary skill in the art, the specific meanings of the above terms in the embodiments of the present application can be understood according to specific situations.

In the present application, the battery cell may include a lithium-ion battery, a sodium-ion battery or a magnesium-ion battery and so on, which will not be limited in the embodiments of the present application. The battery unit may be cylindrical, flat or in another shape, which will not be limited by the embodiments of the present application. The battery cells are generally classified into three types depending on the way of package: cylindrical battery cells, prismatic battery cells and pouch battery cells, which are also not limited in the embodiments of the present application. In the following embodiments, for convenience of description, a lithium metal battery is taken as an example for illustration.

The battery mentioned in the embodiments of the present application refers to a single physical module including one or more battery cells to provide a higher voltage and capacity. For example, the battery mentioned in the present application may include a battery module or a battery pack, etc. The battery generally includes a box for packaging one or more battery cells. The box can prevent liquid or other foreign matters from affecting charging or discharging of the battery cells.

In a new energy battery vehicle, a battery box as an energy source is mounted in the vehicle, and the battery in the battery box discharges to drive the running of an electric motor of the new energy vehicle. As people's requirements for new energy vehicles gradually increase, the requirements for the energy density of the battery are also constantly increasing. For a high-energy battery system with a silicon-doped anode, when a single battery or a plurality of batteries in the battery system are subjected to thermal runaway, they can generate a gas at a temperature greater than 1500°C. When the maximum speed of the gas is greater than the speed of sound, the existing aerogel-based thermal insulation material can no longer block the temperature impact and gas flow impact of such high-temperature and high-speed gas flow, and the aerogel-based thermal insulation material thus will undergo structural thermal and mechanical disintegrations, resulting in protection failure. The high-temperature and high-speed gas flow rushes through the box of a battery pack, causing the box of the battery that is made of a steel plate with a melting point of 1500°C to directly burn and continue to burn for about 30 seconds, directly damaging the main body of the new energy vehicle and endangering the safety of passengers.

In order to solve the aforementioned problem, an embodiment of the present application provides a technical solution. A protective plate is provided in the box of the battery pack. The protective plate can block a high-temperature and high-speed gas-solid mixture generated when a battery is subjected to thermal runaway, reducing the possibility of the box of the battery suffering from gas flow impact and high-temperature melting, thereby improving the safety performance of the battery.

The protective plate described in the embodiment of the present application is applicable to batteries and electrical devices using batteries.

The electrical device may be, but not limited to, a vehicle, a mobile phone, a portable device, a labtop, a ship, a spacecraft, an electric toy, an electric tool, and so on. The vehicle may be a fuel vehicle, a gas vehicle or a new energy vehicle. The new energy vehicle may be an all-electric vehicle, a hybrid electric vehicle, an extended-range vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

In the following embodiments, for convenience of description, the electrical device being a vehicle is taken as an example for illustration.

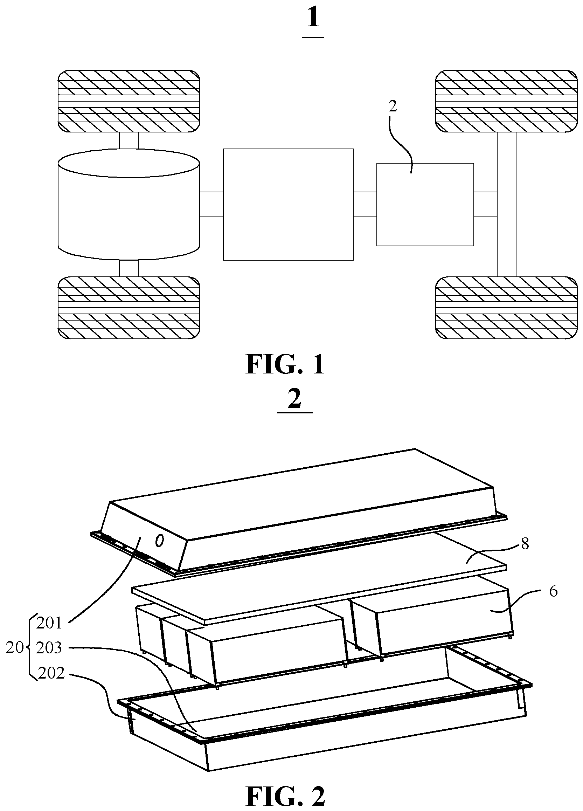

Fig. 1 is a schematic structural diagram of a vehicle provided in an embodiment of the present application. As shown in Fig. 1, the vehicle 1 is internally provided with a battery 2. The battery 2 may be provided at the bottom or head or tail of the vehicle 1. The battery 2 may be configured to supply power to the vehicle 1. For example, the battery 2 may be used as an operation power supply of the vehicle 1.

Fig. 2 is an exploded schematic diagram of a battery provided in an embodiment of the present application. As shown in Fig. 2, the battery 2 includes a box 20, a battery cell 6 and a protective plate 8. The battery cell 6 and the protective plate 8 are accommodated in the box 20.

The box 20 is used to accommodate the battery cell 6. The box 20 may be of various configurations. In some embodiments, the box 20 may include a first box portion 201 and a second box portion 202. The first box portion 201 and the second box portion 202 are covered by each other, and the first box portion 201 and the second box portion 202 together define an accommodating space 203 for accommodating the battery cell 6. The second box portion 202 may be of a hollow structure with one end open, and the first box portion 201 may be of a plate-like structure. The first box portion 201 covers the open side of the second box portion 202 to form the box 20 having the accommodating space 203. The first box portion 201 and the second box portion 202 may alternatively both be of a hollow structure with one side open, and the open side of the first box portion 201 covers the open side of the second box portion 202 to form the box 20 having the accommodating space 203. Of course, the first box portion 201 and the second box portion 202 can be of various shapes, such as a cylinder or a cuboid.

In order to improve the sealing performance after the first box portion 201 and the second box portion 202 are connected to each other, a sealing member, such as a sealant and a sealing ring, may be further provided between the first box portion 201 and the second box portion 202.

Assuming that the first box portion 201 covers the top of the second box portion 202, the first box portion 201 can also be called a top cover, and the second box portion 202 can also be called a bottom wall.

In the battery 2, there are plurality of battery cells 6. The plurality of battery cells 6 may be connected in series, in parallel or in series-parallel. The series-parallel connection means that some of the plurality of battery cells 6 are connected in series and some are connected in parallel. The plurality of battery cells 6 may be directly connected in series or in parallel or in series-parallel, and then an entirety composed of the plurality of battery cells 6 may be accommodated in the box 20. Of course, it is also possible that the plurality of battery cells 6 are first connected in series, in parallel or in series-parallel to form a plurality of battery modules (not shown), and the plurality of battery modules are then connected in series or in parallel or in series-parallel to form a whole, and are accommodated in the box 20. The plurality of battery cells 6 in the battery module may be electrically connected to each other via a bus component, so as to realize parallel connection, series connection or series-parallel connection of the plurality of battery cells 6 in the battery module.

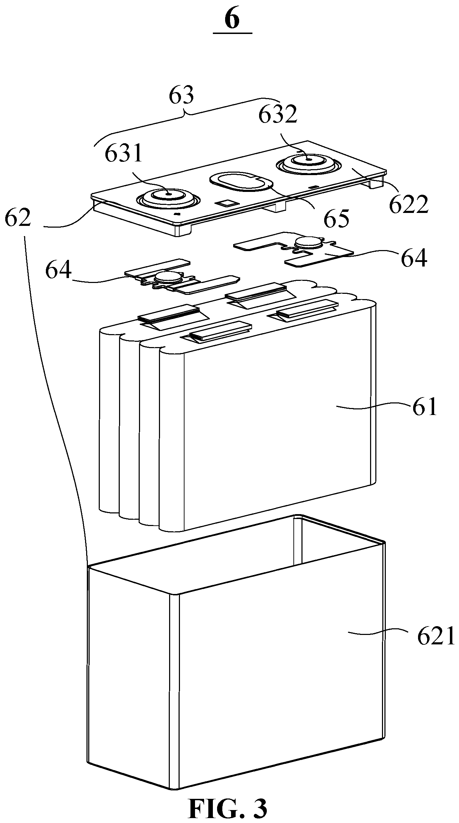

Fig. 3 is an exploded schematic structural diagram of a battery cell according to an embodiment of the present application. As shown in Fig. 3, the battery cell 6 includes one or more electrode assemblies 61, a housing 621 and an end cover 622. The housing 621 and the end cover 622 form a shell or a battery casing 62. A wall of the housing 621 and the end cover 622 are both called walls of the battery cell 6. For a cuboid-shaped battery cell 6, the walls of the housing 621 include a bottom wall and four side walls. The housing 621 is shaped according to the shape of one or more electrode assemblies 61 after combination. For example, the housing 621 may be a hollow cuboid or cube or cylinder, and one surface of the housing 621 has an opening such that one or more electrode assemblies 61 can be placed in the housing 621. For example, when the housing 621 is a hollow cuboid or cube, one plane of the housing 621 is an opening surface, i.e., the plane does not have a wall, so that the inside and outside of the housing 621 are in communication with each other. When the housing 621 is a hollow cylinder, an end face of the housing 621 is an opening surface, i.e., the end face does not have a wall, so that the inside and outside of the housing 621 are in communication with each other. The end cover 622 covers the opening and is connected to the housing 621 to form a closed cavity in which the electrode assembly 61 is placed. The housing 621 is filled with an electrolyte, such as an electrolytic solution.

The battery cell 6 may further comprise two electrode terminals 63, and the two electrode terminals 63 may be provided on the end cover 622. The end cover 622 is generally in the shape of a flat plate, and the two electrode terminals 63 are fixed on a flat plate surface of the end cover 622. The two electrode terminals 63 are a positive electrode terminal 631 and a negative electrode terminal 632, respectively. Each electrode terminal 63 is correspondingly provided with a connecting member 64 also called a current collecting member 64, which is located between the end cover 622 and the electrode assembly 61 and configured to electrically connect the electrode assembly 61 to the electrode terminal 63.

In this battery cell 6, according to actual use requirements, there may be a single or a plurality of battery assemblies 61. As shown in Fig. 3, there are four separate battery assemblies 61 in the battery cell 6.

A pressure relief mechanism 65 may also be provided on the battery cell 6. The pressure relief mechanism 65 is configured, when an internal pressure or temperature of the battery cell 6 reaches a threshold, to be actuated to relieve the internal pressure or heat.

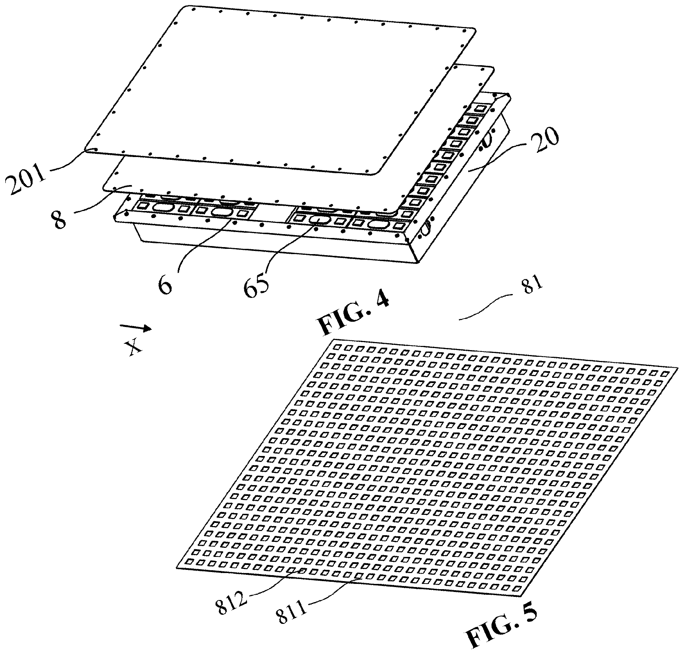

Fig. 4 is an exploded schematic structural diagram of a battery according to another embodiment of the present application. As shown in Fig. 4, the battery 2 includes a battery cell 6, which battery cell 6 is provided with a pressure relief mechanism 65; and a protective plate 8, which protective plate 8 is disposed opposite the pressure relief mechanism 65. The protective plate 8 includes at least two protective sheets, and the at least two protective sheets are different polymer matrix composite fiber sheets.

In the embodiment of the present application, the pressure relief mechanism 65 is a structural component that is actuated to release the internal pressure of the battery cell 6 when the internal pressure or temperature of the battery cell 6 reaches a threshold. For example, the pressure relief mechanism 65 may be a temperature-sensitive pressure relief mechanism configured to be capable of being melted when the internal temperature of the battery cell 6 provided with the pressure relief mechanism 65 reaches a threshold; and/or the pressure relief mechanism 65 may be a pressure-sensitive pressure relief mechanism configured to be capable of being fractured when an internal gas pressure of the battery cell 6 provided with the pressure relief mechanism 65 reaches a threshold. The type of pressure relief mechanism is not limited in the present application.

The battery 2 includes a battery cell 6. The battery cell 6 is provided with a pressure relief mechanism 65 for protecting the battery cell 6. The battery 2 further includes a protective plate 8. The protective plate 8 includes at least two protective sheets which are polymer matrix composite fiber sheets. The protective plate 8 is disposed opposite the pressure relief mechanism 65, that is, the protective plate 8 directly faces the pressure relief mechanism 65. The protective plate 8 composed of the at least two polymer matrix composite fiber sheets can withstand high temperature and impact.

In the above solution, by disposing the pressure relief mechanism 65 opposite the protective plate 8, when the battery cell is subjected to thermal runaway, the protective plate 8 made of polymer matrix composite fibers can reduce the possibility of a high-temperature and high-speed gas-solid mixture being released from the pressure relief mechanism 65, and protect the box 20 of the battery from gas flow impact and high-temperature melting, thereby reducing the influence on the performance of the battery.

Optionally, the at least two protective sheets have high-temperature resistance capabilities decreasing in a direction away from the pressure relief mechanism 65.

When the pressure relief mechanism 65 releases the high-temperature and high-speed gas-solid mixture, the protective plate 8 needs to protect the box of the battery 20 to prevent the box 20 of the battery 2 from being damaged due to high temperature and high speed. The protective plate 8 includes at least two different protective sheets, and the at least two different protective sheets have decreasing high-temperature resistance capabilities, that is, the protective sheet closest to the pressure relief mechanism 65 in the protective plate 8 has the strongest high-temperature resistance and impact resistance capabilities.

**In** the above solution, by using the protective plate 8 designed with a gradient structure, while improving the safety of the battery 2, the high-temperature resistance capabilities and the impact resistance capabilities of different protective sheets can be fully utilized, which will not lead to excess performance and thus reduce the cost of the protective plate 8.

Optionally, the polymer composite fiber sheets are fiber-reinforced resin composite sheets.

In the above solution, the fiber-reinforced resin composite plate prepared with resin among polymer materials as the matrix serve as the protective plate 8. Compared with other polymer material matrices, the fiber-reinforced resin composite plate has a better high-temperature resistance and impact resistance performance.

Fig. 5 is a schematic structural diagram of a fiber-reinforced resin layer according to an embodiment of the present application. The fiber-reinforced resin composite sheet includes a plurality of fiber-reinforced resin layers 81, and each fiber-reinforced resin layer 81 is made of a composite of a fiber material and a resin material.

The composite process of the fiber material and the resin material is not limited in the present application. For example, an individual fiber material layer 811 may be immersed in a resin material slurry, such that the resin material slurry is fully infiltrated into fiber pores 812 in the individual fiber material layer 811, and then baked at a temperature of 60°C-120°C for 3-30 minutes, to prepare a fiber-reinforced resin layer 81.

The fiber-reinforced resin material in the embodiment of the present application is a material that is dark brown in color and has good acid resistance, mechanical properties, and heat resistance performance, can maintain its structural integrity and dimensional stability even at very high temperatures, and is widely used in anti-corrosion engineering, adhesives and flame retardants.

In the above solution, the fiber-reinforced resin is a material that can withstand high temperature and impact. By using the fiber-reinforced resin composite sheets prepared from this material, and disposing the protective plate 8 made of a plurality of fiber-reinforced resin composite sheets opposite the pressure relief mechanism 65, when the high temperature and emissions inside the battery cell 6 rush out of the battery cell 6 at a high speed, the protective plate 8 can protect the box 20 to minimize the possibility of the box 20 being impacted by high-temperature melting and high-speed emissions, thereby protecting the safety of the battery 2.

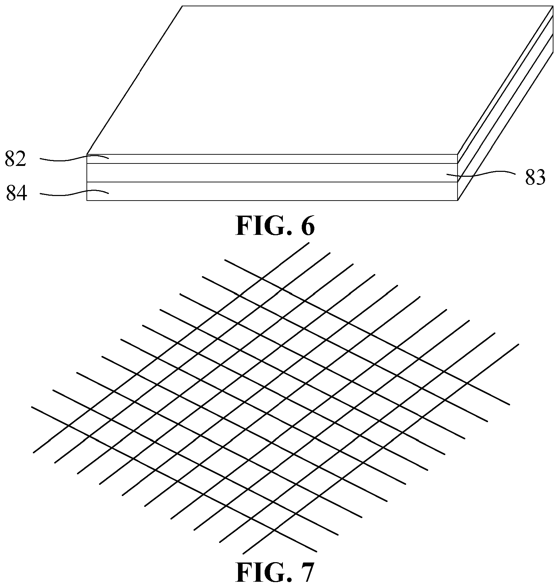

Fig. 6 is a schematic structural diagram of a protective plate according to an embodiment of the present application. As shown in Fig. 6, the protective plate 8 includes a first protective sheet 82, a second protective sheet 83 and a third protective sheet 84. The first protective sheet 82, the second protective sheet 83 and the third protective sheet 84 are sequentially away from the pressure relief mechanism 65.

The preparation process of preparing the protective plate 8 from the first protective sheet 82, the second protective sheet 83 and the third protective sheet 84 is not limited in the present application. That is, the protective plate may be integrally formed, or different protective sheets may be prepared separately and then combined by means of hot pressing, etc. The following is described only by way of example.

For example, the first protective sheet 82, the second protective sheet 83 and the third protective sheet 84 may be prepared separately first. The fiber material layer 811 of the individual first protective sheet 82 is immersed into the resin material slurry, such that the resin material slurry is fully infiltrated into the fiber material layer 811 of the individual first protective sheet 82, and then baked at a temperature of 60°C-120°C for 3-30 minutes to prepare an individual fiber-reinforced resin layer 81 of the first protective sheet 82.

Then, a fiber material with slightly weaker high-temperature resistance and impact resistance capabilities is used to prepare an individual fiber-reinforced resin layer 81 of the second protective sheet 83 with the other conditions remaining unchanged.

Then, a fiber material with the weakest high-temperature resistance and impact resistance capabilities is used to prepare an individual fiber-reinforced resin layer 81 of the third protective sheet 84 with the other conditions remaining unchanged.

The multiple individual fiber-reinforced resin layers 81 of the three different protective sheets described above are laminated in sequence, and hot-pressed under a pressure of 0.1-10 Mpa and a temperature of 100°C-200°C to form a protective plate 8. The number of fiber-reinforced resin layers 81 in the first protective sheet 82, the second protective sheet 83 and the third protective sheet 84 may be changed according to actual requirements. **In** addition, the resin materials of the first protective sheet 82, the second protective sheet 83 and the third protective sheet 84 may be changed according to requirements. **In** the above solution, the protective plate 8 includes three protective sheets, namely the first protective sheet 82, the second protective sheet 83 and the third protective sheet 84. The protective plate 8 made of the three protective sheets is disposed opposite the pressure relief mechanism 65, so that the protection effect of the protective plate 8 on the safety of the battery 2 can be further improved.

Optionally, the fiber material in the first protective sheet 82 is a carbon fiber or a quartz fiber.

The carbon fiber refers to a high-strength and high-modulus fiber with a carbon content of 90% or more. Its high-temperature resistance capability ranks first among all fiber materials, and it is an excellent material for manufacturing high-tech equipment such as aerospace and aviation. The quartz fiber is a fiber material made from high-purity quartz or natural crystal, and is an excellent high-temperature resistant material. In the embodiment of the present application, the first protective sheet 82 made of the carbon fiber or the quartz fiber can completely block the high temperature and the gas-solid impact released by the pressure relief mechanism 65. Generally, the first protective plate 82 made of the carbon fiber or the quartz fiber is used in the battery 2 to withstand high-temperature impact of about 1800°C.

In the above solution, the first protective sheet 82, the second protective sheet 83 and the third protective sheet 84 are sequentially away from the pressure relief mechanism 65, that is, the first protective sheet 82 is closest to the pressure relief mechanism 65. The first protective sheet 82 made of the carbon fiber or the quartz fiber has the best high-temperature resistance effect and can reduce the influence on the performance of the battery.

Optionally, the fiber material in the second protective sheet 83 is a ceramic material or a high silica fiber.

The ceramic fiber is a fiber material with ceramic components such as alumina added to the material. The ceramic fiber has an excellent high-temperature resistance capability. In the embodiment of the present application, the second protective sheet 83 made of the ceramic fiber can withstand high-temperature impact of 1000°C, and can continue to protect the battery cell 6.

**In** the above solution, the first protective sheet 82, the second protective sheet 83 and the third protective sheet 84 are sequentially away from the pressure relief mechanism 65, that is, the second protective sheet 83 is not closer to the pressure relief mechanism 65 than the first protective sheet 82. Compared with the first protective sheet 82 made of the carbon fiber or the quartz fiber, the second protective sheet 83 made of the ceramic fiber or the high silica fiber can save material costs. Moreover, after the most high-temperature resistant first protective sheet 82 blocks the high temperature, the second protective sheet 83 also has a good high temperature resistance capability and continues to protect the battery 2 from the high temperature and the gas flow impact.

Optionally, the fiber material in the third protective sheet 84 is a glass fiber or a pre-ammonium fiber.

The glass fiber and the pre-ammonia fiber are cheap and are the most commonly used reinforcement materials, electrical insulation materials and thermal insulation materials among composite materials. The temperature that the glass fiber and the pre-ammonia fiber can withstand is 180°C-430°C. In the embodiment of the present application, the third protective sheet 84 made of the glass fiber or the pre-ammonia fiber can be used as the last layer of protection of the box 20 of the battery.

In the above solution, the first protective sheet 82, the second protective sheet 83 and the third protective sheet 84 are sequentially away from the pressure relief mechanism 65, that is, the third protective sheet 84 is farthest from the pressure relief mechanism 65. Compared with the first protective sheet 82 and the second protective sheet 83, the third protective sheet 84 withstands the lowest temperature released by the pressure relief mechanism 65. Therefore, using the glass fiber or the pre-ammonia fiber to make the third protective sheet 84 can further reduce the possibility of heat diffusion, protect the safety of the battery, and save costs to the greatest extent.

Fig. 7 is a structural diagram of an arrangement of a fiber material according to an embodiment of the present application. As shown in Fig. 7, optionally, each fiber-reinforced resin layer 81 of the plurality of fiber-reinforced resin layers 81 of the first protective sheet 82 includes fibers arranged in two directions.

When the fibers are arranged in two directions, the strength of the fiber material in this arrangement is higher than that of the fiber material with only one arrangement direction. The first protective sheet 82 is closest to the pressure relief mechanism 65, and thus the first protective sheet 82 has the highest performance requirements.

In the above solution, the first protective sheet 82 is closest to the pressure relief mechanism 65, and the first protective sheet 82 first comes into contact with the high temperature and the gas flow when they are released by the pressure relief mechanism 65. Therefore, the first protective sheet 82 has the highest requirements for high-temperature resistance and impact resistance capabilities. The first protective sheet 82 includes a plurality of fiber-reinforced resin layers 81, and each fiber-reinforced resin layer 81 of the plurality of fiber-reinforced resin layers 81 includes fibers arranged in two directions. The fiber material in such an arrangement has a higher strength, so that the protection effect of the first protective sheet 82 on the battery can be improved.

Optionally, each fiber-reinforced resin layer 81 of the plurality of fiber-reinforced resin layers 81 of each of the second protective sheet 83 and the third protective sheet 84 includes fibers arranged in the same direction, and different fiber-reinforced resin layers 81 are perpendicular to each other.

In order to increase the strength of the first protective sheet 82 and further enhance the protection effect of the first protective sheet 82 on the high-temperature gas flow released by the pressure relief mechanism 65, the fiber material in each fiber-reinforced resin layer 81 of the first protective sheet 82 includes fibers arranged in two directions. However, the second protective sheet 83 and the third protective sheet 84, which do not have such high strength requirements, only need to maintain a certain strength.

In the above solution, the arrangement of the fiber material in each fiber-reinforced resin layer 81 of the second protective sheet 83 and the third protective sheet 84 maintains a single orientation, which can maintain a certain strength and also reduce costs.

Optionally, the fiber material of each fiber-reinforced resin layer 81 of the plurality of fiber-reinforced resin layers 81 of each of the first protective sheet 82, the second protective sheet 83 and the third protective sheet 84 includes fibers arranged in two directions.

When the fiber material of each fiber-reinforced resin layer 81 includes two arrangement directions, the first protective sheet 82, the second protective sheet 83 and the third protective sheet 84 using this arrangement have a higher strength.

In the above solution, the fiber materials in the plurality of fiber-reinforced resin layers 81 in different protective sheets include fibers arranged in two different directions, so that the protection effect of the protective plate 8 on the battery cell 6 can be further improved.

Optionally, the two arrangement directions are perpendicular to each other.

In the above solution, when the fiber material in the fiber-reinforced resin layer 81 includes fibers that are perpendicular to each other, the fiber material using this arrangement has the highest strength, and the protective plate 8 made of the fiber material in this arrangement has the best protection effect on the battery 6.

Optionally, a thickness ratio of the first protective sheet 82 to the protective plate 8 ranges from 1: 10 to 2:10.

In the above solution, when the thickness of the first protective sheet 82 is 10% of the total thickness of the protective plate 8, the first protective sheet 82 can withstand the high temperature and the gas flow impact released by the pressure relief mechanism 65. When the thickness of the first protective sheet 82 is continued to be increased to 20% of the thickness of the protective plate 8, the protection effect of the first protective sheet 82 on the battery 2 can be improved. If the thickness of the first protective sheet 82 continues to increase, it will only increase the cost too much but have little effect on improving the protection effect.

Optionally, a thickness ratio of the second protective sheet 83 to the protective plate 8 ranges from 3:10 to 6:10.

In the above solution, when the thickness of the second protective sheet 83 is between 30% and 60% of the total thickness of the protective plate 8, the second protective sheet 83 can continue to protect the battery 2 and save the overall production cost of the protective plate 8.

Optionally, a thickness ratio of the third protective sheet 84 to the protective plate 8 ranges from 2: 10 to 5:10.

In the above solution, when the thickness of the third protective sheet 84 is between 20% and 50% of the total thickness of the protective plate 8, the third protective sheet 84 can continue to protect the battery 2 and save the overall production cost of the protective plate 8.

Optionally, a thickness ratio of the first protective sheet 82, the second protective sheet 83 and the third protective sheet 84 is 2:4:4.

The high-temperature resistance capabilities of the first protective sheet 82, the second protective sheet 83 and the third protective sheet 84 decrease in sequence, and the material costs of the three also decrease in sequence.

In the above solution, the protective plate 8 designed with the gradient fiber structure is disposed directly opposite the pressure relief mechanism 65, so that not only can the box 20 of the battery cell 6 be prevented from the high temperature and gas flow released by the pressure relief mechanism 65, and the safety of the battery cell 6 be protected, but the production cost of the protective plate 8 can also be reduced. Setting the thicknesses of the first protective sheet 82, the second protective sheet 83 and the third protective sheet 84 that are sequentially away from the pressure relief mechanism 65 to 2:4:4 can minimize material costs while reducing the influence on the performance of the battery 2.

Optionally, the resin material is a silicon-based aerogel modified resin or a high-temperature resistant flame retardant resin.

The resin material in the embodiment of the present application may be a silicon-based aerogel modified resin or a high-temperature resistant flame retardant resin.

In the above solution, the material made of a composite of fiber and resin has a high-temperature resistance and impact resistance performance. The use of the silicon-based aerogel modified resin or the high-temperature resistant flame retardant resin can further improve the high-temperature resistance and impact resistance performance of the protective plate 8.

Optionally, the fiber material has a thickness of 6-100 um.

For example, in the embodiment of the present application, the thickness of the fiber material may be 10 um, 20 um, 50 um, etc., and can be appropriately adjusted according to requirements during the production process.

In the above solution, the use of the fiber material with a thickness of 6-100 um can not only make the protective plate 8 have the high-temperature resistance and impact resistance performance, but can also reduce the production cost.

Optionally, the protective plate 8 has a thickness of 0.2-5 mm.

For example, in the embodiment of the present application, the thickness of the protective plate 8 may be 1 mm, 2 mm or 3 mm, and can also be appropriately adjusted according to requirements during the production process.

In the above solution, the use of the protective plate 8 with a thickness of 0.2-5 mm can not only make the protective plate 8 have the high-temperature resistance and impact resistance performance, but can also reduce the production cost.

Optionally, as shown in Fig. 4, the battery cell 6 is accommodated in the box 20. The pressure relief mechanism is disposed on a first wall of the battery cell 6. The first wall is a wall of the battery cell 6 that is disposed close to a top cover 201 of the box 20 and opposite the top cover 201.

When the first wall is a wall of the battery cell 6 that is disposed close to the top cover 201 of the box 20 and opposite the top cover 201, the pressure relief mechanism 65 is close to and faces the top cover 201.

In the above solution, the protective plate 8 is disposed between the pressure relief mechanism 65 and the top cover 201. When the battery cell 6 is subjected to thermal runaway and the pressure relief mechanism 65 releases the internal temperature and pressure of the battery cell 6, the protective plate 8 made of the polymer matrix composite fibers can block the high temperature and the high-speed gas-solid mixture released by the pressure relief mechanism 65, reducing the possibility of the top cover 201 of the battery 2 suffering from the gas flow impact and the high-temperature melting, thereby protecting the safety of the battery 2.

Optionally, the protective plate 8 is integrated with the top cover 201.

By the protective plate 8 being integrated with the top cover 201, it is meant that the protective plate 8 and the top cover 201 may be used together as the top cover 201 of the battery 2, or the protective plate 8 may be used alone as the top cover 201 of the battery 2.

In the above solution, when the protective plate 8 and the top cover 201 are used as the top cover 201 of the battery 2, the top cover 201 of the battery 2 has a two-layer structure, and the protective plate 8 protects the top cover 201 and thus better protects the battery 2. When the protective plate 8 is used alone as the top cover 201 of the battery 2, the protective plate 8 can not only protect the top cover 201 of the battery 2 from the high temperature and the gas flow impact, but can also make the structure of the battery 2 simpler and reduce the production cost of the battery 2.

When the protective plate 8 is integrated with the top cover 201, the top cover 201 may have an irregular shape. In the embodiment of the present application, the top cover 201 may also be square, round, etc., which is not limited in the present application. That is, during the production process, the top cover 201 and the protective plate 8 can be manufactured in any shape according to specific product requirements.

Optionally, as shown in Fig. 4, the protective plate 8 is disposed between the top cover 201 and the first wall.

The protective plate 8 is disposed between the top cover 201 and the first wall, that is, the pressure relief mechanism 65 faces the top cover 201, and the protective plate 8 is disposed between the top cover 201 and the pressure relief mechanism 65.

In the above solution, the protective plate 8 is disposed between the top cover 201 and the pressure relief structure 65, and the pressure relief mechanism 65 faces the top cover 201. In this way, the protective plate 8 can directly protect the top cover 201, so that the top cover 201 directly facing the pressure relief mechanism 65 is protected from the high temperature and the gas flow impact, thereby reducing the influence on the performance of the battery 2.

Still referring to Fig. 4, optionally, the size of the protective plate 8 is the same as that of the top cover 201.

The protective plate 8 is disposed between the top cover 201 and the pressure relief structure 65 and the size of the protective plate 8 is the same as that of the top cover 201, so that the protective plate 8 can protect the top cover 201 more comprehensively.

In the above solution, when the protective plate 8 is disposed between the top cover 201 and the pressure relief structure 65 and the size of the protective plate 8 is the same as that of the top cover 201, the protective plate 8 can not only protect the top cover 201 more comprehensively so that the top cover 201 is protected from the high temperature and the high-speed gas-solid mixture released by the pressure relief mechanism 65, but can also improve the sealing effect on the interior of the battery 2. In addition, the same size of the protective plate 8 and the top cover 201 also facilitates assembly and reduces the difficulty of assembly.

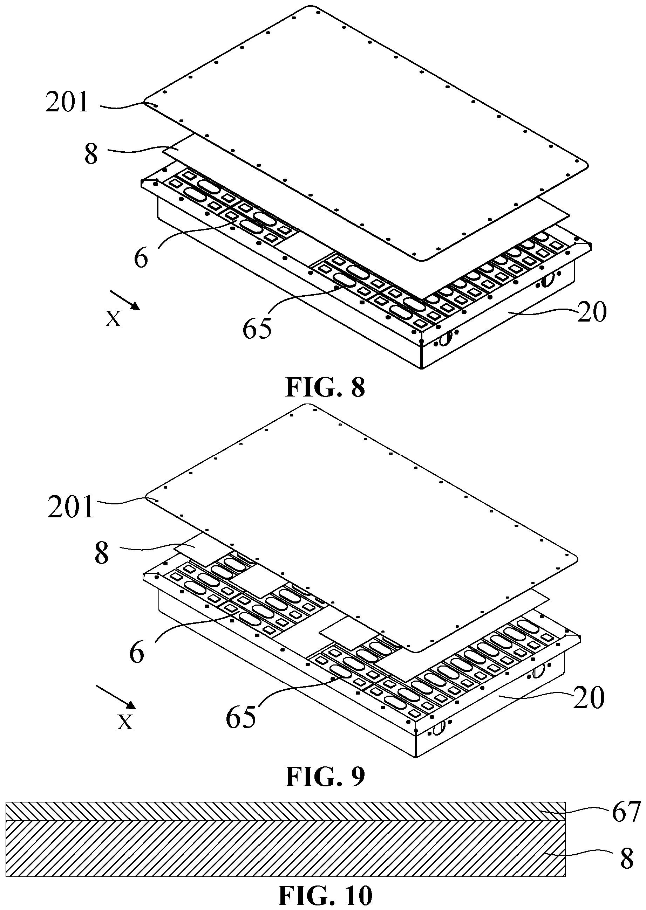

Fig. 8 is an exploded schematic structural diagram of a battery according to still another embodiment of the present application. As shown in Fig. 8, optionally, the size of the protective plate 8 is less than that of the top cover 201.

In the above solution, the protective plate 8 is disposed between the top cover 201 and the first wall provided with the pressure relief mechanism 65. When the size of the protective plate 8 is less than the top cover 201, the protective plate 8 can not only protect the top cover 201 to improve the safety performance of the battery 2, but can also reduce the production cost.

Fig. 9 is an exploded schematic structural diagram of a battery according to still another embodiment of the present application. As shown in Fig. 9, optionally, the protective plate 8 is strip-shaped, and the projection of the protective plate 8 on the first wall covers the pressure relief mechanism 65.

The protective plate 8 may be in the shape of a strip as shown in Fig. 9, or may be in the shape of a circle, or any other shape, as long as the projection of the protective plate 8 on the first wall covers the pressure relief mechanism 65, and the function of protecting the box 20 of the battery 2 can be achieved. The shape of the protective plate 8 is not limited in the present application.

In the above solution, the protective plate 8 is disposed between the top cover 201 and the first wall. When the protective plate 8 is strip-shaped and the projection thereof on the first wall covers the pressure relief mechanism 65, the protective plate 8 can maintain a good protection effect on the top cover 201, and can also reduce the cost to the greatest extent and avoid the waste of materials in non-protected areas.

Optionally, the length of the protective plate 8 is 1 to 3 times the length of the pressure relief mechanism 65 in a first direction X. The first direction X is an extension direction of the protective plate 8.

In the above solution, the length of the protective plate 8 is 1 to 3 times the length of the pressure relief mechanism 65 in the first direction X, so that the protective plate 8 can completely cover the pressure relief mechanism 65, and the defending effect of the protective plate 8 on the pressure relief mechanism 65 can be improved.

Optionally, there are a plurality of block-shaped protective plates 8, and a projection of each protective plate 8 on the first wall covers a respective pressure relief mechanism 65.

In the above solution, the protective plate 8 is disposed between the top cover 201 and the first wall. Each protective plate 8 is block-shaped and the projection thereof on the first wall covers the respective pressure relief mechanism 65. Each block-shaped plate is individually arranged above the corresponding pressure relief mechanism 65 to form a one-to-one protection to accurately defend the respective pressure relief mechanism 65.

Optionally, the area of each protective plate is 1-2 times the area of the respective pressure relief mechanism 65.

In the above solution, the block-shaped protective plate 8 implements one-to-one protection for a respective pressure relief mechanism 65 for precise protection. The area of each block-shaped protective plate 8 is 1-2 times the area of the respective pressure relief mechanism 65, further improving the protection effect of the protective plate 8 on the battery 2.

Optionally, the protective plate 8 is connected to the top cover 201 by means of bolts or an adhesive.

There are many methods for connecting the protective plate 8 to the top cover 201, as long as the two are fixed. The connection method is not limited in the present application. However, in the actual production process, choosing a convenient and operable connection method is conducive to widespread promotion in actual applications.

In the above solution, the bolt or adhesive is used to realize the connection between the protective plate 8 and the top cover 201. This connection method is simple to implement, has strong operability, and is conducive to widespread use in production.

Optionally, the battery cell 6 is accommodated in the box 20. The pressure relief mechanism 65 is disposed on a first wall of the battery cell. The first wall is a wall of the battery cell 6 that is disposed close to a bottom wall of the box 20 and opposite the bottom wall.

When the first wall is a wall of the battery cell 6 that is disposed close to the bottom wall of the box 20 and opposite the bottom wall, the pressure relief mechanism 65 is close to and faces the bottom wall.

**In** the above solution, the protective plate 8 is disposed between the pressure relief mechanism 65 and the bottom wall. When the battery cell 6 is subjected to thermal runaway and the pressure relief mechanism 65 releases the internal temperature and pressure of the battery cell 6, the protective plate 8 made of the polymer matrix composite fibers can block the high temperature and the high-speed gas-solid mixture released by the pressure relief mechanism 65, protecting the bottom wall of the battery 2 from the gas flow impact and the high-temperature melting, thereby protecting the safety of the battery 2.

Optionally, the protective plate 8 is integrated with the bottom wall.

By the protective plate 8 being integrated with the bottom wall, it is meant that the protective plate 8 and the bottom wall may be used together as the bottom wall of the battery 2, or the protective plate 8 may be used alone as the bottom wall of the battery 2.

In the above solution, when the protective plate 8 and the bottom wall are used as the bottom wall of the battery 2, the bottom wall of the battery 2 has a two-layer structure, and the protective plate 8 protects the bottom wall and thus better protects the battery 2. When the protective plate 8 is used alone as the bottom wall of the battery 2, the protective plate 8 can not only protect the bottom wall of the battery 2 from the high temperature and the gas flow impact, but can also make the structure of the battery 2 simpler and reduce the production cost of the battery 2.

When the pressure relief mechanism 65 inside the battery 2 only faces the top cover 201, the protective plate 8 is integrated with the top cover 201 to protect the safety of the battery 2; and when the pressure relief mechanism 65 only faces the bottom wall, the protective plate 8 is integrated with the bottom wall to protect the safety of battery 2. When there are pressure relief mechanisms 65 inside the battery 2 that face both the top cover 201 and the bottom wall, protective plates 8 may be provided at both the top cover 201 and the bottom wall. The arrangement of the protective plate 8 in the battery 2 is not specifically limited in the present application, as long as the protective plate 8 is present at the wall directly facing the pressure relief mechanism 65 of the battery cell 6 in the battery 2. That is, the protective plate 8 may be the top cover 201, the bottom wall and a side wall. Furthermore, the protective plate 8 may be a crossbeam in the battery 2. The specific position of the protective plate 8 may be modified according to the arrangement position of the battery cell 6 in the battery 2, or the protective plate may be disposed at any position in the battery 2 according to actual application requirements.

Optionally, the protective plate 8 is disposed between the bottom wall and the first wall.

The protective plate 8 is disposed between the bottom wall and the first wall, that is, the pressure relief mechanism 65 faces the bottom wall, and the protective plate 8 is disposed between the bottom wall and the pressure relief mechanism 65.

In the above solution, the protective plate 8 is disposed between the bottom wall and the pressure relief structure 65, and the pressure relief mechanism 65 faces the top cover 201. In this way, the protective plate 8 can directly protect the bottom wall, so that the bottom wall directly facing the pressure relief mechanism 65 is protected from the high temperature and the gas flow impact, thereby reducing the influence on the performance of the battery 2.

Fig. 10 is a schematic structural diagram of a protective plate according to another embodiment of the present application. As shown in Fig. 10, in an embodiment of the present application, a thermal insulation component 67 is disposed between the protective plate 8 and the box 20.

In the above solution, adding a protective plate 8 between the first wall provided with the pressure relief mechanism 65 and the box 20 can protect the box 20 of the battery 2 from the high temperature and the high-speed gas flow impact. Further providing a thermal insulation component 67 between the protective plate 8 and the box 20 can further reduce the temperature of the box 20 and protect the safety of the battery 2.

An embodiment of the present application further provides an electrical device, including a battery 2 according to the above embodiments. The battery 2 is configured to supply electric energy.

The embodiments of the present application will be described below. The embodiments described below are exemplary and are only used to explain the present application and shall not be construed as a limitation to the present application. Where specific techniques or conditions are not specified in the embodiments, the techniques or conditions described in the literatures of the art or the product specifications are followed.

Experimental tests were conducted on protective plates made of fiber-reinforced resin materials. The test results are shown in Table 1.

**Table 1 Tensile property test of protective plates with different thicknesses**

| Material of protective plate | State of top cover of battery | State of protective plate | Temperature of top cover |
|---|---|---|---|
| Protective plate of 1 mm (three-layer protective sheet: a first protective sheet of a carbon fiber, a second protective sheet of a ceramic fiber, and a third protective sheet of a glass fiber) | Undamaged | Complete, almost unbent | 359°C |
| Protective plate of 1 mm (three-layer protective sheet: a first protective sheet of a carbon fiber, a second protective sheet of a ceramic fiber, and a third protective sheet of a glass fiber) | Undamaged | Complete, almost unbent | 324°C |
| Protective plate of 1 mm (a protective plate of a ceramic fiber alone) | Undamaged | Delaminated, severely warped | 623°C |
| Protective plate of 1 mm (a protective plate of a ceramic fiber alone) | Undamaged | Forming a hole, severely warped | 1321°C |
| Mica plate of 1 mm | Forming a hole | Shattered and disintegrated | Flame temperature |
| Mica plate of 1 mm | Forming a hole | Shattered and disintegrated | Flame temperature |

While the present application has been described with reference to the above embodiments, various modifications may be made and components therein may be replaced with equivalents without departing from the scope of the present application. In particular, the technical features mentioned in the various examples can be combined in any manner as long as there is no structural conflict. The present application is not limited to the specific embodiments disclosed herein, but rather includes all technical solutions falling within the scope of the claims.

## Claims

1. A battery, comprising:
a battery cell provided with a pressure relief mechanism; and
a protective plate disposed opposite the pressure relief mechanism, wherein the protective plate comprises at least two protective sheets, and the at least two protective sheets are different polymer matrix composite fiber sheets.

2. The battery according to claim 1, wherein the at least two protective sheets have high-temperature resistance capabilities decreasing in a direction away from the pressure relief mechanism.

3. The battery according to claim 1 or 2, wherein the polymer matrix composite fiber sheets are fiber-reinforced resin composite sheets.

4. The battery according to claim 3, wherein each fiber-reinforced resin composite sheet comprises a plurality of fiber-reinforced resin layers, and each fiber-reinforced resin layer is made of a composite of a fiber material and a resin material.

5. The battery according to any one of claims 1 to 4, wherein the protective plate comprises a first protective sheet, a second protective sheet and a third protective sheet, the first protective sheet, the second protective sheet and the third protective sheet being sequentially away from the pressure relief mechanism.

6. The battery according to claim 5, wherein the fiber material in the first protective sheet is a carbon fiber or a quartz fiber.

7. The battery according to claim 5 or 6, wherein the fiber material in the second protective sheet is a ceramic fiber or a high silica fiber.

8. The battery according to any one of claims 5 to 7, wherein the fiber material in the third protective sheet is a glass fiber or a pre-ammonia fiber.

9. The battery according to any one of claims 5 to 8, wherein each of the plurality of fiber-reinforced resin layers of the first protective sheet comprises fibers arranged in two directions.

10. The battery according to claim 9, wherein each of the plurality of fiber-reinforced resin layers of each of the second protective sheet and the third protective sheet comprises fibers arranged in the same direction, and different fiber-reinforced resin layers are perpendicular to each other.

11. The battery according to any one of claims 5 to 8, wherein each of the plurality of fiber-reinforced resin layers of each of the first protective sheet, the second protective sheet and the third protective sheet comprises fibers arranged in two directions.

12. The battery according to claim 9 or 11, wherein the two arrangement directions are perpendicular to each other.

13. The battery according to any one of claims 5 to 12, wherein a thickness ratio of the first protective sheet to the protective plate ranges from 1:10 to 2:10.

14. The battery according to any one of claims 5 to 13, wherein a thickness ratio of the second protective sheet to the protective plate ranges from 3:10 to 6:10.

15. The battery according to any one of claims 5 to 14, wherein a thickness ratio of the third protective sheet to the protective plate ranges from 2:10 to 5:10.

16. The battery according to any one of claims 5 to 15, wherein a thickness ratio of the first protective sheet, the second protective sheet and the third protective sheet is 2:4:4.

17. The battery according to any one of claims 4 to 16, wherein the resin material is a silicon-based aerogel modified resin or a high-temperature resistant flame retardant resin.

18. The battery according to any one of claims 4 to 17, wherein the fiber material has a thickness of 6-100 um.

19. The battery according to any one of claims 1 to 18, wherein the protective plate has a thickness of 0.2-5 mm.

20. The battery according to any one of claims 1 to 19, wherein the battery cell is accommodated in a box, the pressure relief mechanism is disposed on a first wall of the battery cell, and the first wall is a wall of the battery cell that is disposed close to a top cover of the box and opposite the top cover.

21. The battery according to claim 20, wherein the protective plate is integrated with the top cover.

22. The battery according to claim 20, wherein the protective plate is disposed between the top cover and the first wall.

23. The battery according to claim 22, wherein the size of the protective plate is the same as that of the top cover.

24. The battery according to claim 22, wherein the size of the protective plate is less than that of the top cover.

25. The battery according to claim 22, wherein the protective plate is strip-shaped, and a projection of the protective plate on the first wall covers the pressure relief mechanism.

26. The battery according to claim 25, wherein the length of the protective plate is 1 to 3 times the length of the pressure relief mechanism in a first direction which is an extension direction of the protective plate.

27. The battery according to claim 22, wherein there are a plurality of block-shaped protective plates, and a projection of each protective plate on the first wall covers a respective pressure relief mechanism.

28. The battery according to claim 27, wherein the area of each protective plate is 1-2 times the area of the respective pressure relief mechanism.

29. The battery according to any one of claims 23 to 28, wherein the protective plate is connected to the top cover by means of bolts or an adhesive.

30. The battery according to any one of claims 1 to 19, wherein the battery cell is accommodated in a box, the pressure relief mechanism is disposed on a first wall of the battery cell, and the first wall is a wall of the battery cell that is disposed close to a bottom wall of the box and opposite the bottom wall.

31. The battery according to claim 30, wherein the protective plate is integrated with the bottom wall of the box.

32. The battery according to claim 30, wherein the protective plate is disposed between the bottom wall and the first wall.

33. The battery according to claim 22 or 32, wherein a thermal insulation component is provided between the protective plate and the box.

34. An electrical device, comprising the battery of any one of claims 1 to 33, the battery being configured to supply electric energy.
